# EUROPEAN PATENT SPECIFICATION

(11) **EP 2 980 467 B1**
(45) Date of publication and mention of the grant of the patent: **03.07.2019**
(21) Application number: 14775369.3
(22) Date of filing: 13.03.2014
(51) Int. Cl.: F16L 59/06, F16L 59/02, F16L 59/04, F16L 59/08, B32B 37/10, F16L 59/065, B32B 37/18

(54) **VACUUM HEAT-INSULATING MATERIAL**
VAKUUMWÄRMEDÄMMENDES MATERIAL
MATÉRIAU D'ISOLATION THERMIQUE SOUS VIDE

(30) Priority: 29.03.2013 JP 2013072574
(43) Date of publication of application: 03.02.2016
(73) Proprietor: Mitsubishi Electric Corporation, Tokyo 100-8310 (JP)
(72) Inventor: SUZUKI, Shunkei, Tokyo 100-8310 (JP); SHINOKI, Toshio, Tokyo 100-8310 (JP)
(74) Representative: Sajda, Wolf E.
(86) International application number: PCT/JP2014/056804
(87) International publication number: WO 2014/156703

(56) References cited:
- WO-A1-2011/102337
- WO-A2-2012/052849
- JP-A- H0 415 398
- JP-A- 2009 156 353
- JP-A- 2010 190 257
- JP-A- 2014 051 993
- US-A1- 2003 124 300

## Description

### Technical Field

The present invention relates to a vacuum insulator including an internal core member such as a glass fiber sheet, and an external packaging member such as a composite resin and an Al deposited film, having high thermal insulation performance, and having a shape capable of being three-dimensionally formed.

### Background Art

Since vacuum insulators have thermal conductivity one order of magnitude smaller than that of urethane foam materials used in conventional refrigerators, an amount used as insulators for refrigerators, hot water tanks of water heaters, vending machines or the like is increasing.

However, since a packaging member of the vacuum insulator has a reduced internal pressure, and an atmospheric pressure is applied to an entire surface of the vacuum insulator, the vacuum insulator is very rigid, and the packaging member formed of a thin film is easily damaged if a bend, a recess, a groove or the like are to be formed afterward. Therefore, in most of application examples, the vacuum insulator is used in a flat plate shape. Depending on a shape of a position where the vacuum insulator is used, the vacuum insulator is divided into a plurality of sheets and used.

However, when a vacuum insulator is installed on a side surface portion having a cylindrical shape of a water-heater hot water tank or the like, when the vacuum insulator has a flat plate shape, a gap is generated between the vacuum insulator and a wall surface. When the vacuum insulator is divided, a gap is also generated in a divided fashion, so that a heat leakage is increased.

In order to effectively insulate heat by using the vacuum insulator of the same size, it is effective to perform a bending process along a cylindrical side surface shape.

However, once the vacuum insulator is sealed by pressure reduction, the atmospheric pressure is applied to the entire vacuum insulator, and the vacuum insulator thus becomes very rigid. Meanwhile, since the vacuum insulator has high porosity, an inner bent surface is buckled inward to form deep wrinkles due to an inner and outer diameter circumference difference of a thickness when machining such as bending is performed. Due to a decrease in the thickness of the vacuum insulator in a portion where the wrinkles are formed, a density of a core member is increased to decrease the porosity.

Also, glass wool used for the core member rises in a vertical direction along the wrinkles to cause fibers of the glass themselves to work as a heat transfer path, so that a solid heat conduction amount is increased. Thus, there occurs a problem that thermal insulation performance of the vacuum insulator after the machining such as bending is deteriorated.

To solve the problem, a case in which a concave-convex shape is previously formed in a vacuum insulator at the time of pressure reduction sealing, and the vacuum insulator is bent along the concave-convex shape is disclosed in Patent Literature 1. By forming the concave-convex shape, a deterioration in thermal insulation performance caused by a decrease in thickness or wrinkles of a bent portion when the vacuum insulator is bent can be suppressed. In this case, the concave-convex shape can be formed in the vacuum insulator by performing pressure reduction sealing in a state in which a packaging member into which a core member is inserted is sandwiched between molds where a concave-convex shape is formed at the time of vacuum sealing without adding a post-process for forming concaves and convexes.

Patent Literature 2 discloses a vacuum insulation material including a plurality of convex protrusions provided on a surface of a core material that is present inside of the bent vacuum insulation material when it is used in a bent state, and so that the core material on which the convex protrusions are provided in advance is inserted into an outer covering material and vacuum-sealed with the outer covering material. By reducing a contact area between the convex protrusions and an inner side surface of the outer covering material in contact with the surface on which the convex protrusions are provided, it is possible to reduce a frictional force between the core material and the outer covering material.

### List of Citations

### Patent Literature

Patent Literature 1: Japanese Unexamined Patent Application Publication JP 2007-205 530 A.
Patent Literaure 2: WO 2012/052849 A2

### Summary of the Invention

### Technical Problem

Since the molds having a concave-convex shape need to be provided in a vacuum chamber in a method described in Patent Literature 1, the size of the vacuum chamber is increased, and the vacuum chamber becomes complicated, so that the cost is increased.

Also, an internal surface area of the vacuum chamber is increased, and an amount of gas adsorbed to a surface of the vacuum chamber is increased. Thus, it takes longer to reach a desired vacuum chamber internal pressure, and productivity is deteriorated.

Also, when a plurality of types of concave-convex shapes are sequentially formed at the time of producing the vacuum insulator, it is necessary to replace the molds each time. Thus, the productivity is similarly deteriorated.

Also, since the core member and the packaging member are sandwiched between the molds at the time of vacuum pressure reduction, a thickness of the vacuum insulator after the pressure reduction sealing is decreased if a distance between the upper and lower molds is small. A density is thereby increased to deteriorate the thermal insulation performance.

Also, in order to form the concave-convex shape at the time of the pressure reduction sealing, it is necessary to sandwich the core member and the packaging member at least at a pressure equal to or higher than the atmospheric pressure. At this time, a load is applied to the packaging member, so that an aluminum deposited film that is a gas barrier layer of the packaging member may be damaged. As a result, there occurs a problem that gas barrier properties are deteriorated to increase an amount of gas entering the vacuum insulator, lower a degree of vacuum, and thus deteriorate the thermal insulation performance.

The present invention has been made to solve at least one of the problems as described above, and an object thereof is to provide a vacuum insulator in which a concave-convex shape can be formed without providing a mold or the like in a vacuum chamber.

### Solution to the Problem

A vacuum insulator according to the present invention comprises:
- a core member obtained by laminating a fiber material;- a concave-convex film made of one of resin and a metal foil, and in which a concave-convex shape is formed; and-a packaging member covering the concave-convex film laminated on the core member, and sealed by pressure reduction to form a concave-convex shape corresponding to the concave-convex shape of the concave-convex film on a surface of the packaging member, wherein the packaging member covers the concave-convex film laminated on the core member and an additional core member laminated on the concave-convex film, and is sealed by pressure reduction to form the concave-convex shape on the surface.

Furthermore a method of making such a vacuum insulator is described.

### Advantageous Effects of Invention

In accordance with the vacuum insulator according to the present invention, it is not necessary to provide a mold or the like in a vacuum chamber when the concave-convex shape is formed, and an existing vacuum chamber can be used. Thus, a cost can be reduced. Since it is also not necessary to perform an additional process such as a post-process, a deterioration in productivity can be prevented.

### Brief Description of Drawings

- FIG. 1: shows sectional schematic views of a vacuum insulator according to Embodiment 1 not forming part of the present invention.
- FIG. 2: is a sectional schematic view of the vacuum insulator at the time of a bending process according to the Embodiment 1 not forming part of the present invention.
- FIG. 3: is a schematic view of a front surface and a side surface of a concave-convex film used for the vacuum insulator according to the Embodiment 1 not forming part of the present invention.
- FIG. 4: is a schematic view illustrating a circumference difference between an inner diameter and an outer diameter (an inner and outer diameter circumference difference) of a bent portion of the vacuum insulator according to the Embodiment 1 not forming part of the present invention.
- FIG. 5: is a sectional schematic view of a vacuum insulator according to Embodiment 2 not forming part of the present invention.
- FIG. 6: shows sectional schematic views of a vacuum insulator according to Embodiment 3 of the present invention.
- FIG. 7: is a sectional schematic view of a wrinkle portion formed at the time of a bending process of the vacuum insulator according to the Embodiment 3 of the present invention.
- FIG. 8: is a schematic view of a front surface and a side surface of a concave-convex film used for a vacuum insulator according to Embodiment 4 not forming part of the present invention.
- FIG. 9: is a surface photograph when the vacuum insulator according to the Embodiment 4 not forming part of the present invention is bent so as to have a radius of curvature of 290 mm.
- FIG. 10: is a surface schematic view of a bend film used for a vacuum insulator according to Embodiment 5 not forming part of the present invention.

### Description of Embodiments

Embodiments of the present invention will be described hereinafter based on the drawings. Note that the present invention is not limited by the embodiments described below. Also, a relationship between sizes of respective constituent members in the following drawings may be different from an actual relationship.

### Embodiment 1

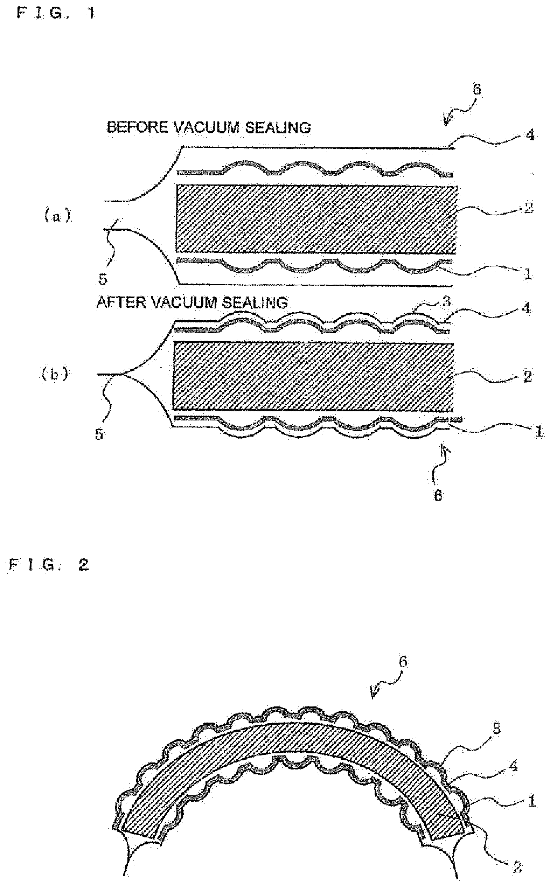

FIG. 1 discloses sectional schematic views of a vacuum insulator 6 according to Embodiment 1 not forming part of the present invention, wherein FIG. 1(a) and FIG. 1(b) show the vacuum insulator 6 before vacuum sealing and after vacuum sealing, respectively.

The vacuum insulator 6 includes a core member 2 obtained by laminating fiber materials, a packaging member 4 formed of gas barrier laminate films, and concave-convex films 1 in which a concave-convex shape is formed. The packaging member 4 is formed into a bag by heat-sealing (thermal-fusion-bonding) three sides of two quadrangular gas barrier laminate films. The vacuum insulator 6 is fabricated by inserting the concave-convex films 1 laminated on a front and a back of the core member 2 from an opening portion 5 on one side of the packaging member 4, reducing a pressure in a vacuum chamber, and then heat-sealing (thermal-fusion-bonding) the opening portion 5.

Here, the concave-convex shape of the concave-convex films 1 is pressed against the packaging member 4 at the time of pressure reduction, and a concave-convex shape 3 is formed on a surface of the packaging member 4 (the vacuum insulator 6). Note that the concave-convex shape 3 formed on the surface of the packaging member 4 is maintained even after sealing.

FIG. 2 is a sectional schematic view of the vacuum insulator 6 at the time of a bending process according to the Embodiment 1 of the present invention.

When the vacuum insulator 6 is subjected to shape machining such as bending as shown in FIG. 2, formation of fine wrinkles is promoted along the concave-convex shape 3 on an inner side to thereby suppress formation of deep wrinkles due to concentration into one portion of an inner and outer diameter circumference difference that is a circumference difference between an inner diameter and an outer diameter of a bent portion at the time of the bending process.

An excess is also generated in the packaging member 4 along the concave-convex shape 3 on an outer side. Since the excess is stretched at the time of the bending process, the inner and outer diameter circumference difference is mitigated to suppress the formation of deep wrinkles on the inner bent side.

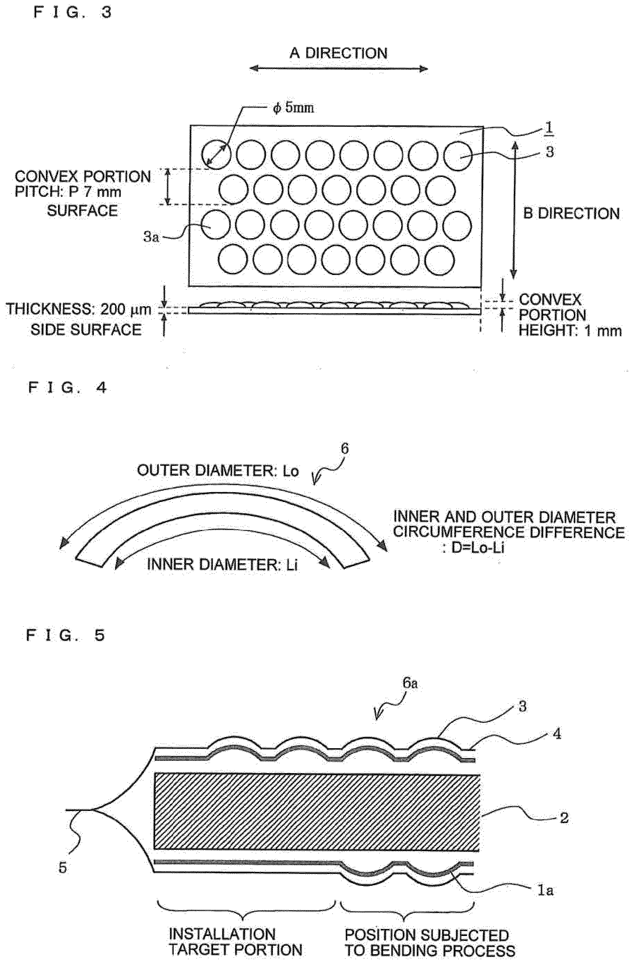

FIG. 3 is a schematic view of a front surface and a side surface of the concave-convex film 1 used for the vacuum insulator 6 according to the Embodiment 1 of the present invention.

As shown in FIG. 3, the concave-convex film 1 is fabricated by forming the concave-convex shape in a PET (polyethylene terephthalate) film having a thickness of 200 µm and dimensions of 500 mm wide × 900 mm long by heat pressing of 150 °C, 640 tf/m², and 1 min. A convex portion diameter, a pitch, and a convex portion height of the concave-convex shape are 5 mm, 7 mm, and 1 mm, respectively.

As the core member 2, 20 laminated sheets of glass wool each having a thickness of 1 µm and an average fiber diameter of 5 µm are used, and cut into 500 mm wide × 900 mm long. The packaging member 4 is formed into a bag by superimposing seal layers of the two quadrangular laminate films, and heat-sealing (thermal-fusion-bonding) the three sides.

The laminate film has a configuration in which an L-LDPE (linear low density polyethylene) film having a thickness of 50 µm as the seal layer, a film formed by depositing 600 Å aluminum on a PET film having a thickness of 12 µm and a 7 µm aluminum foil bonded to the aluminum as a gas barrier layer, and a nylon film having a thickness of 25 µm as a protective layer are attached together by dry laminating.

Next, a method for fabricating the vacuum insulator 6 will be described.

The concave-convex films 1 are laminated one by one on a front surface and a back surface of the core member 2 obtained by laminating the glass wool such that convex portions are located outside. The concave-convex films 1 and the core member 2 are inserted into the packaging member 4, and a pressure is reduced to 1 Pa in a vacuum chamber having a size of 800 mm wide, 1200 mm long, and 200 mm high. After that, the opening portion 5 is sealed by heat sealing (thermal fusion bonding), and the resulting object is removed from the vacuum chamber, so that the vacuum insulator 6 is fabricated.

At the time of pressure reduction sealing, the concave-convex films 1 and the packaging member 4 come into close contact with each other, and the concave-convex shape 3 is formed on the surface of the packaging member 4. A diameter of a convex portion 3a of the concave-convex shape 3 formed on the surface of the packaging member 4 is 4.5 mm±0.1 mm, a pitch of the convex portion 3a (is formed) is 7 mm, and a height of the convex portion 3a is 0.8 mm ± 0.1 mm.

Also, a thickness of the vacuum insulator 6 is 15 mm. By regularly forming the concave-convex shape 3 as described above, wrinkles formed when the vacuum insulator 6 is subjected to the bending process are evenly dispersed into all directions, and the formation of fine wrinkles is promoted. Accordingly, rising of the core member 2 (fibers) in a direction to be thermally-insulated can be suppressed.

Thermal conductivity of the vacuum insulator 6 described above is 0.0020 W/m·K when an average temperature of the vacuum insulator 6 is set to a value of 25 °C. Also, 15 wrinkles are formed in a zone of 100 mm in an A direction that is a direction in which the vacuum insulator 6 is bent when the bending process is performed over 500 mm × 500 mm from a center of the vacuum insulator 6 such that a radius of curvature is 290 mm, and an average depth of the wrinkles is 0.5 mm.

Also, thermal conductivity of the vacuum insulator 6 after the bending process is 0.0022 W/m·K. When a deterioration in thermal insulation performance is evaluated by an acceleration test for confirming reliability over time, thermal conductivity under a condition of passage of 10 years is 0.0076 W/m·K, which is not different from that in which the concave-convex shape 3 is not formed.

On the other hand, in a case in which a concave-convex shape is formed on a surface of a packaging member at the time of vacuum sealing by providing molds having a concave-convex shape in a vacuum chamber as in a conventional example, it is necessary to increase a height of the vacuum chamber, and an inner portion of the vacuum chamber also becomes complicated, so that a surface area of an inner wall surface of the vacuum chamber is increased. Since an amount of gas adsorbed to the wall surface is thereby increased, it takes longer to reach a desired pressure when a pressure is reduced to the desired pressure, and productivity is deteriorated.

Also, since a distance between the molds is constant, a convex portion height and a convex portion diameter vary due to a variation in a thickness of a core member. At this time, if the convex portion height is small, and the convex portion diameter is small, wrinkles are not formed in convex portions at the time of the bending process. Thus, a load is concentrated to form deep wrinkles. Also, if the convex portion height on the outer bent side is small, an inner and outer diameter circumference difference cannot be mitigated by bending due to a small excess. Thus, an excess film on the inner side is largely loosened to form deep wrinkles.

Accordingly, fibers of the core member laid horizontally by employing a multi-layer configuration rise at an angle closer to a vertical state along the deeply-formed wrinkles, so that the fibers themselves work as a heat transfer path to increase a solid heat conduction amount, and deteriorate thermal insulation performance. On the other hand, if the convex portion height is large, the core member is compressed by a force equal to or larger than the desired pressure. Thus, a thickness of the vacuum insulator is decreased, and a density is increased to increase the solid heat conduction amount and deteriorate the thermal insulation performance.

### Comparative Example 1

Thermal conductivity of a vacuum insulator fabricated on the same conditions as those of the Embodiment 1 except that the concave-convex film 1 is not used is 0.0020 W/m·K when an average temperature of the vacuum insulator is set to 25 °C, which is the same value as that of the Embodiment 1. However, when a bending process is performed on the same conditions as those of the Embodiment 1, 8 wrinkles are formed in a zone of 100 mm in the A direction, an average depth of the wrinkles is 2.0 mm, and thermal conductivity of the vacuum insulator after the bending process is 0.0028 W/m·K, which are larger values than those of the Embodiment 1.

### Comparative Example 2

Thermal conductivity of a vacuum insulator fabricated by forming a concave-convex shape on a surface of a packaging member with a core member and the packaging member sandwiched with 11 tf/m² between two molds having a thickness of 10 mm and 500 mm wide × 500 mm long is 0.0022 W/m·K when an average temperature of the vacuum insulator is set to 25 °C, which is a larger value than that of the Embodiment 1.

Also, when a bending process is performed on the same conditions as those of the Embodiment 1, 15 wrinkles are formed in a zone of 100 mm in the A direction, an average depth of the wrinkles is 0.5 mm, and thermal conductivity of the vacuum insulator after the bending process is 0.0024 W/m·K, which are larger values than those of the Embodiment 1. Furthermore, when a deterioration in thermal insulation performance is evaluated by an acceleration test, thermal conductivity under a condition of passage of 10 years is 0.0180 W/m·K, which is a larger value than that of the Embodiment 1.

Also, when the vacuum insulator is fabricated, it takes 1.6 times longer to reduce a pressure to a sealing pressure of 1 Pa as compared to the case in which the vacuum insulator 6 of the Embodiment 1 is fabricated.

A diameter of a convex portion of the concave-convex shape formed on the surface of the packaging member is 4.5 mm ± 0.5 mm, a pitch of the convex portion is 7 mm, and a height of the convex portion is 0.8 mm ± 0.5 mm. A thickness of the vacuum insulator is 14 mm.

### Comparative Example 3

A vacuum insulator fabricated on the same conditions as those of the Embodiment 1 except that a concave-convex film in which the pitch of the convex portion of the concave-convex film 1 in FIG. 2 is changed from 7 mm to 20 mm is used, and subjected to a bending process on the same conditions as those of the Embodiment 1, 10 wrinkles are formed in a zone of 100 mm in the A direction, an average depth of the wrinkles is 1.5 mm, and thermal conductivity of the vacuum insulator after the bending process is 0.0026 W/m·K, which are larger values than those of the Embodiment 1.

### Comparative Example 4

A vacuum insulator fabricated on the same conditions as those of the Embodiment 1 except that a bend film subjected to a bending process at a pitch of 5 mm in a direction perpendicular to the A direction is used instead of the concave-convex film 1 in FIG. 2, and subjected to a bending process on the same conditions as those of the Embodiment 1, 20 wrinkles are formed in a zone of 100 mm in the A direction, an average depth of the wrinkles is 0.4 mm, and thermal conductivity of the vacuum insulator after the bending process is 0.0022 W/m·K, which are larger values than those of the Embodiment 1.

Based on the above description, the vacuum insulator 6 according to the present Embodiment 1 has smallest thermal conductivity after the bending process, and thus has highest thermal insulation performance as compared to the vacuum insulators according to the Comparative Examples 1 to 4.

In the vacuum insulator 6 according to the present Embodiment 1, it is not necessary to provide the mold or the like in the vacuum chamber when the concave-convex shape 3 is formed, and an existing vacuum chamber can be used. Thus, a cost can be reduced.

Also, it does not take long to reach the desired vacuum chamber internal pressure, and there is no additional process such as a post-process, so that the deterioration in productivity is prevented.

Also, since it is not necessary to use the mold when the concave-convex shape 3 is formed, a problem arising from the use of the mold does not occur.

Also, since the vacuum insulator 6 has the same thickness as that of a conventional vacuum insulator in which the concave-convex shape 3 is not formed, it is possible to fabricate the vacuum insulator 6 having high thermal insulation performance and high reliability over time, and capable of being three-dimensionally formed by suppressing the formation of deep wrinkles at the time of the bending process without deteriorating initial thermal insulation performance.

Note that the material and the configuration of the vacuum insulator 6 are not limited to those described above.

FIG. 4 is a schematic view illustrating the circumference difference between the inner diameter and the outer diameter (the inner and outer diameter circumference difference) of the bent portion of the vacuum insulator 6 according to the Embodiment 1 not forming part of the present invention.

Although an example in which the concave-convex shape 3 is a semispherical shape is shown in FIG. 3, the present embodiment is not limited thereto, and any shape such as a triangular prism, a quadrangular prism, a triangular pyramid, a quadrangular pyramid, a groove shape, and a depressed shape can be used. Also, any size can be employed as the size.

However, as the pitch of the convex portion 3a is smaller, formation of finer wrinkles is promoted, and the rising of the core member 2 (the fibers) in the direction to be thermally-insulated can be suppressed. Thus, a convex portion pitch: P is desired to be smaller than a value obtained by dividing a circumference: Li on the inner diameter side of the bent portion of the vacuum insulator 6 shown in FIG. 4 by a circumference difference: D between the inner diameter and the outer diameter of the bent portion, that is, P < Li/D.

Also, in the present Embodiment 1, a concave and a convex having the same shape are formed on the inner bent side and the outer bent side. However, a concave and a convex having different shapes may be formed on the inner bent side and the outer bent side, and a concave and a convex having different shapes may be also formed on one film.

Also, although the PET film is used for the concave-convex film 1 in the present Embodiment 1, the present embodiment is not limited thereto as long as a shape can be maintained even when an atmospheric pressure is applied thereto. For example, a plastic resin film of polypropylene, polyethylene or the like, and a metal foil of aluminum, stainless steel or the like can be also used.

Also, when the concave-convex film 1 has a small thickness, a ratio of the core member 2 to the thickness of the vacuum insulator 6 can be increased, and the thermal conductivity of the vacuum insulator 6 can be decreased. Thus, the thickness is preferably 10 µm or more to 3000 µm or less.

Also, when the concave-convex shape 3 is formed offset in the A direction, continuous formation of wrinkles in a B direction that is a direction perpendicular to the A direction can be suppressed at the time of the bending process. Thus, the effect of suppressing the formation of deep wrinkles is improved by dispersing the load.

As the core member 2, a known material can be used. Particularly, the fiber material has an effect of suppressing the rising of the fibers when wrinkles are formed. For example, inorganic fibers such as glass wool, glass fibers, alumina fibers, silica-alumina fibers, silica fibers, rock wool, and silicon carbide, and resin fibers such as PET fibers, polystyrene (PS) fibers, polypropylene fibers, and nylon fibers may be used.

One type or two or more types of the above materials are used to obtain the core member 2.

As the packaging member 4, a known material can be used. As the protective layer, a nylon film, a polyethylene-terephthalate film, a polyacrylonitrile film, a stretched polypropylene film, or the like can be used. Also, as the heat-seal layer, a low density polyethylene film, a high density polyethylene film, a non-stretched polypropylene film, a polyacrylonitrile film, an ethylene-vinylalcohol copolymer film, or a mixture thereof can be used, but the heat-seal layer is not particularly limited thereto.

Also, as the gas barrier layer, a metal foil of aluminum, stainless steel, or the like, a polyethylene-terephthalate film obtained by depositing alumina, silica, or alumina and silica, or the like can be used. In the present Embodiment 1, when a deposition film in which a pinhole is easily formed is used, an effect of suppressing a pinhole formation can be obtained.

### Embodiment 2.

FIG. 5 is a sectional schematic view of a vacuum insulator 6a according to Embodiment 2 not forming part of the present invention.

Although the present Embodiment 2 will be described hereinafter, an overlapping description with the present Embodiment 1 is omitted.

In the present Embodiment 2, a concave-convex film 1a in which the concave-convex shape is formed at a position subjected to the bending process in the vacuum insulator 6a, and an installation target portion is flat with no concave-convex shape formed therein is inserted. The other elements are the same as those of the present Embodiment 1.

In the installation target portion with no concave and convex formed therein, the vacuum insulator 6a has a flat surface, and an installation surface and the surface of the vacuum insulator 6a can be brought into close contact. Thus, a micro space due to concaves and convexes is not formed between the installation surface and the vacuum insulator 6a, and heat transfer due to convection of a gaseous body such as air can be suppressed. Therefore, thermal conductivity of the vacuum insulator 6a is kept low, and higher thermal insulation performance can be obtained.

### Embodiment 3.

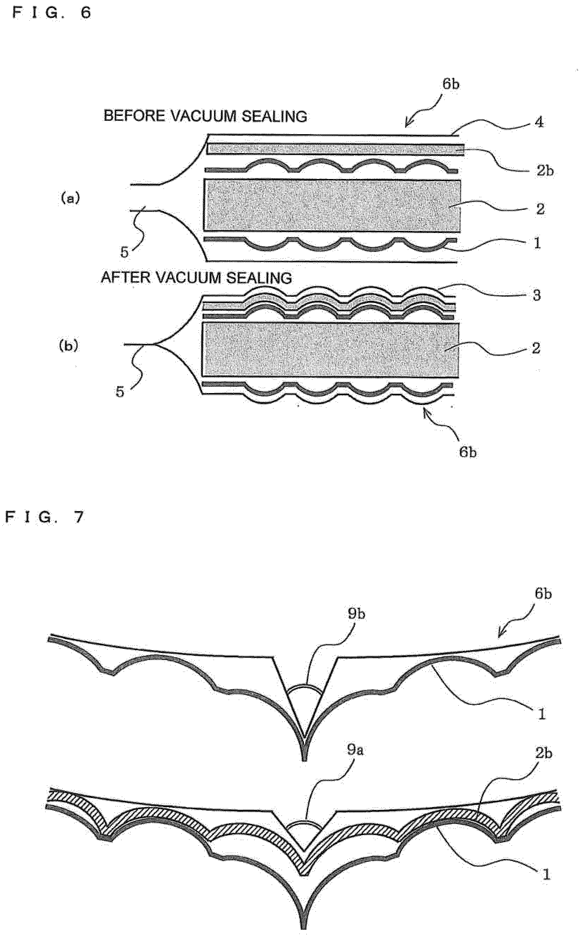

FIG. 6 discloses sectional schematic views of a vacuum insulator 6b according to Embodiment 3 of the present invention, and FIG. 7 is a sectional schematic view of a wrinkle portion formed at the time of the bending process of the vacuum insulator 6b according to the Embodiment 3 of the present invention. FIGS. 6(a) and 6(b) show the vacuum insulator 6b before vacuum sealing and after vacuum sealing, respectively.

Although the present Embodiment 3 will be described hereinafter, an overlapping description with the present Embodiments 1 and 2 is omitted.

In the present Embodiment 3, the vacuum insulator 6b includes the core member 2, the packaging member 4 formed of the gas barrier films, the concave-convex films 1 laminated on the front and the back of the core member 2, and a core member 2b laminated on the concave-convex film 1, and has a reduced internal pressure. By further laminating the core member 2b on the concave-convex film 1 laminated on the core member 2 as shown in FIGS. 6, the core member 2b enters fine wrinkles, the formation of which is promoted when the bending process is performed.

As shown in FIG. 7, a wrinkle apex angle 9a becomes larger than a wrinkle apex angle 9b on a side where the core member 2b is not provided. When the wrinkle apex angle 9a is increased, the fibers of the core member have a gentler angle, and the increase in the solid heat conduction amount due to the rising of the fibers can be further reduced.

### Embodiment 4.

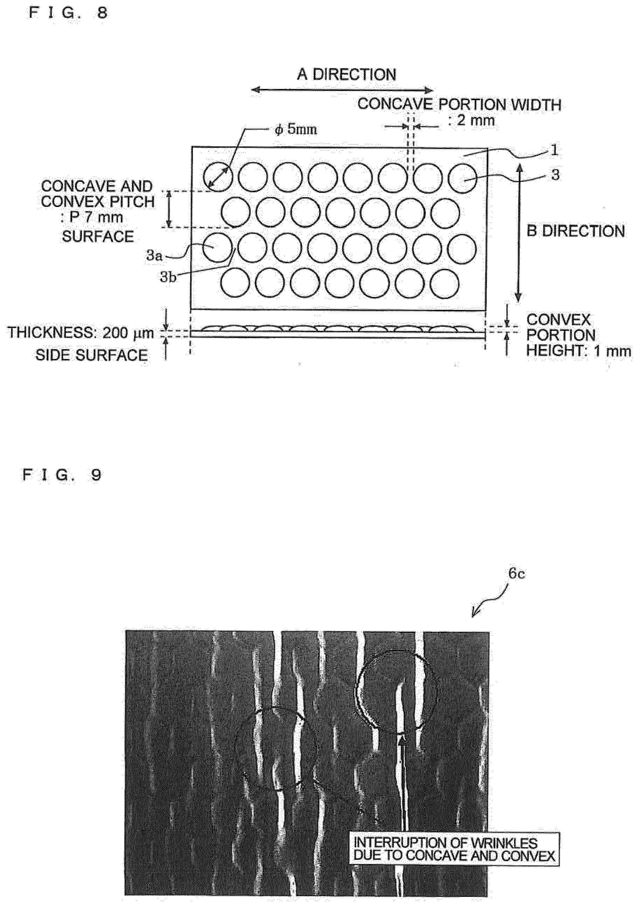

FIG. 8 is a schematic view of a front surface and a side surface of the concave-convex film 1 used for a vacuum insulator 6c according to Embodiment 4 not forming part of the present invention.

Although the present Embodiment 4 will be described hereinafter, an overlapping description with the present Embodiments 1 to 3 is omitted.

In the present Embodiment 4, the concave-convex shape 3 formed on the concave-convex film 1 in the vacuum insulator 6c is arranged such that the convex portions 3a are offset by 1/2 (3.5 mm) of the pitch in the A direction in which the vacuum insulator 6c is subjected to the bending process.

FIG. 9 is a surface photograph when the vacuum insulator 6c according to the Embodiment 4 not forming part of the present invention is bent so as to have a radius of curvature of 290 mm.

As shown in FIG. 8, a concave portion 3b is formed between the adjacent convex portions 3a in the A direction, and a width of the convex portion 3a is 5 mm, which is larger than a width of 2 mm of the concave portion 3b. In the B direction that is a direction perpendicular to the A direction (that is a direction in which the vacuum insulator 6c is bent when the bending process is performed), the convex portion 3a and the concave portion 3b are adjacent to each other. That is, the convex portion 3a is arranged so as to interrupt the concave portion 3b adjacent thereto in the B direction.

Therefore, continuous formation of wrinkles in the B direction, which are formed when the vacuum insulator 6c is bent, is suppressed as shown in FIG. 9. Thus, the wrinkles are finely fragmented to suppress the formation of deep wrinkles. The rising of the core member 2 (the fibers) in the direction to be thermally-insulated can be suppressed.

### Embodiment 5.

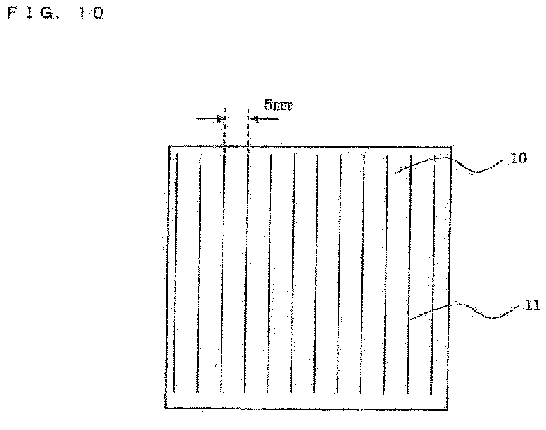

FIG. 10 is a surface schematic view of a bend film 10 used for a vacuum insulator 6d according to Embodiment 5 not forming part of the present invention.

Although the present Embodiment 5 will be described hereinafter, an overlapping description with the present Embodiments 1 to 4 is omitted.

In the present Embodiment 5, the bend film 10 in which bend marks 11 are formed at a pitch of 5 mm in a direction in which wrinkles are formed is used instead of the concave-convex film 1 in the vacuum insulator 6d. When the vacuum insulator 6d is subjected to the bending process, wrinkles are formed along the bend marks 11 at the pitch of 5 mm.

On the other hand, if the bending process is performed on the vacuum insulator 6d fabricated without using the bend film 10 at an inner radius of curvature of 250 mm, wrinkles are formed at an average pitch of 10 mm. The pitch of forming wrinkles when the bending process is performed is decreased by the bend marks 11 of the bend film 10 as described above, so that a depth of the wrinkles can be decreased, the rising of the fibers along inner portions of the wrinkles can be suppressed, and the deterioration in the thermal insulation performance can be suppressed. Note that the bend direction is not limited to the direction perpendicular to the A direction, and may have an angle with respect to the A direction, or intersect with the A direction.

The Embodiments 1 to 5 described above may be also applied in a form combined with each other.

### List of Reference Signs List

- 1: concave-convex film
- 1a: concave-convex film
- 2: core member
- 2b: core member
- 3: concave-convex shape (on a surface of a packaging member)
- 3a: convex portion
- 3b: concave portion
- 4: packaging member
- 5: opening portion
- 6: vacuum insulator
- 6a: vacuum insulator
- 6b: vacuum insulator
- 6c: vacuum insulator
- 6d: vacuum insulator
- 7: concave-convex formed core member
- 8: partially concave-convex film
- 9a: wrinkle apex angle
- 9b: wrinkle apex angle
- 10: bend film
- 11: bend mark

## Claims

1. A vacuum insulator (6) comprising:
- a core member (2) obtained by laminating a fiber material;
- a concave-convex film (1) made of one of resin and a metal foil, and in which a concave-convex shape is formed; and
- a packaging member (4) covering the concave-convex film (1) laminated on the core member (2), and sealed by pressure reduction to form a concave-convex shape (3) corresponding to the concave-convex shape of the concave-convex film (1) on a surface of the packaging member (4),
**characterized in that**
the packaging member (4) covers the concave-convex film (1) laminated on the core member (2) and an additional core member (2b) laminated on the concave-convex film (1), and is sealed by pressure reduction to form the concave-convex shape (3) on the surface.

2. The vacuum insulator (6) according to claim 1,
wherein the concave-convex shape of the concave-convex film (1) is regularly formed.

3. The vacuum insulator (6) according to claim 1 or 2,
wherein the concave-convex film (1) has the concave-convex shape formed at a position subjected to the bending process.

4. The vacuum insulator (6) according to any one of claims 1 to 3,
wherein a pitch of forming a convex portion (3a) of the concave-convex shape (3) in the packaging member (4) is smaller than a value obtained by dividing a circumference on an inner diameter side of a bent portion when the vacuum insulator (6) is bent by a circumference difference between an inner diameter and an outer diameter of the bent portion.

5. The vacuum insulator (6) according to any one of claims 1 to 4,
wherein in the concave-convex shape of the concave-convex film (1),
a width of the convex portion is larger than a width of a concave portion formed between adjacent convex portions, and
the convex portion is arranged so as to interrupt the concave portion adjacent thereto in a direction perpendicular to a direction in which the vacuum insulator is bent when a bending process is performed.

6. The vacuum insulator (6) according to any one of claims 1 to 5,
wherein the packaging member (4) is formed so as to be able to suppress formation of wrinkles in the bending process by having the concave-convex shape (3).

7. A method of making a vacuum insulator (6) according to one of the preceding claims comprising:
- forming a core member (2) by laminating fiber materials;
providing:
- two concave-convex films (1) in which a concave-convex shape is formed;
- forming a packaging member (4) into a bag by heat-sealing three sides of two quadrangular gas barrier laminate films;
- inserting the concave-convex films (1) laminated on a front and a back of the core member (2) from an opening portion (5) on one side of the packaging member (4), reducing a pressure in a vacuum chamber to form a concave-convex shape (3) corresponding to the concave-convex shape of the concave-convex film (1) on a surface of the packaging member (4), and then heat-sealing the opening portion (5).

## Patentansprüche

1. Ein Vakuumdämmstoff (6), der Folgendes umfasst:
- ein Kernstück (2), das durch die Laminierung eines Fasermaterials erzielt wird;
- eine konkav-konvexe Schicht (1), die aus einem Harz und einer Metallfolie hergestellt ist, und in der eine konkav-konvexe Form ausgestaltet ist; und
- eine Verpackungskomponente (4), welche die auf dem Kernstück (2) laminierte konkav-konvexe Schicht (1) bedeckt, und welche durch Druckreduktion versiegelt wird, um eine konkav-konvexe Schicht (3) zu bilden, die der konkav-konvexen Form der konkav-konvexen Schicht (1) auf einer Oberfläche der Verpackungskomponente (4) entspricht,
**dadurch gekennzeichnet, dass**
die Verpackungskomponente (4) die auf dem Kernstück (2) laminierte konkav-konvexe Schicht (1) und ein zusätzliches, auf der konkav-konvexen Schicht (1) laminiertes Kernstück (2b) bedeckt, und durch Druckreduktion versiegelt wird, um die konkav-konvexe Form (3) auf der Oberfläche zu bilden.

2. Der Vakuumdämmstoff (6) gemäß Anspruch 1,
wobei die konkav-konvexe Form der konkav-konvexen Schicht (1) ebenmäßig ausgestaltet ist.

3. Der Vakuumdämmstoff (6) gemäß einem der Ansprüche 1 oder 2,
wobei die konkav-konvexe Schicht (1) die an einer dem Krümmungsvorgang unterworfenen Position gebildete konkav-konvexe Form aufweist.

4. Der Vakuumdämmstoff (6) gemäß einem der Ansprüche 1 bis 3,
wobei ein Formungsabstand eines konvexen Abschnitts (3a) der konkav-konvexen Form (3) in der Verpackungskomponente (4) kleiner ist als ein Wert, der durch die Teilung eines Umfangs auf einer Innendurchmesserseite eines gekrümmten Abschnitts ermittelt wird, wenn der Vakuumdämmstoff (6) durch eine Umfangsdifferenz zwischen einem Innendurchmesser und einem Außendurchmesser des gekrümmten Abschnitts gekrümmt wird.

5. Der Vakuumdämmstoff (6) gemäß einem der Ansprüche 1 bis 4,
wobei in der konkav-konvexen Form der konkav-konvexen Schicht (1) eine Breite des konvexen Abschnitts größer ist als eine Breite eines konkaven Abschnitts, der zwischen nebeneinanderliegenden konvexen Abschnitten ausgestaltet ist, und der konvexe Abschnitt so angeordnet ist, dass er den konkaven Abschnitt, der in einer zur Richtung, in welcher der Vakuumdämmstoff bei Durchführung eines Krümmungsvorgangs gekrümmt wird, senkrechten Richtung danebenliegt, unterbricht.

6. Der Vakuumdämmstoff (6) gemäß einem der Ansprüche 1 bis 5,
wobei die Verpackungskomponente (4) so ausgestaltet ist, dass sie die Bildung von Falten während des Krümmungsvorgangs unterdrücken kann, indem sie eine konkav-konvexe Form (3) aufweist.

7. Eine Methode zur Herstellung eines Vakuumdämmstoffs (6) gemäß einem der vorstehenden Ansprüche, welche Folgendes umfasst:
- die Ausgestaltung eines Kernstücks (2) durch die Laminierung von Fasermaterial;
die Bereitstellung:
- zweier konkav-konvexer Schichten (1), in welche eine konkav-konvexe Schicht ausgestaltet ist;
- die Ausgestaltung einer Verpackungskomponente (4) als Tasche, indem drei Seiten zweier viereckiger Gasbarriere-Laminatschichten wärmeversiegelt werden;
- die Einführung der auf einer Vorder- und einer Rückseite des Kernstücks (2) laminierten konkav-konvexen Schichten (1) über einen Öffnungsabschnitt (5) auf einer Seite der Verpackungskomponente (4), wobei ein Druck in einer Vakuumkammer reduziert wird, um eine konkav-konvexe Form (3) zu bilden, welche der konkav-konvexen Form der konkav-konvexen Schicht (1) auf einer Oberfläche der Verpackungskomponente (4) entspricht, und dann der Öffnungsabschnitt (5) wärmeversiegelt wird.

## Revendications

1. Isolateur sous vide (6) comprenant:
- un élément central (2) obtenu en stratifiant un matériau fibreux;
- un film concave-convexe (1) fait soit de résine soit d'une feuille métallique, et dans lequel une forme concave-convexe est formée; et
- un élément d'emballage (4) qui couvre le film concave-convexe (1) stratifié sur l'élément central (2), et scellé par réduction de pression afin de former une forme concave-convexe (3) correspondant à la forme concave-convexe du film concave-convexe (1) sur une surface de l'élément d'emballage (4),
**caractérisé en ce que**
l'élément d'emballage (4) couvre le film concave-convexe (1) stratifié sur l'élément central (2) et un élément central additionnel (2b) stratifié sur le film concave-convexe (1), et est scellé par réduction de pression afin de former la forme concave-convexe (3) sur la surface.

2. Isolateur sous vide (6) selon la revendication 1,
dans lequel la forme concave-convexe du film concave-convexe (1) est formée de manière régulière.

3. Isolateur sous vide (6) selon la revendication 1 ou 2,
dans lequel le film concave-convexe (1) présente la forme concave-convexe formée à une position soumise au processus de flexion.

4. Isolateur sous vide (6) selon l'une quelconque des revendications à 3,
dans lequel un pas de formation d'une portion convexe (3a) de la forme concave-convexe (3) dans l'élément d'emballage (4) est plus petit qu'une valeur obtenue en divisant une circonférence, sur un côté du diamètre intérieur, d'une portion cintrée quand l'isolateur sous vide (6) est cintré par une différence de circonférence entre un diamètre intérieur et un diamètre extérieur de la portion cintrée.

5. Isolateur sous vide (1) selon l'une quelconque des revendications 1 à 4, dans lequel dans la forme concave-convexe du film concave-convexe (1), une largeur de la portion convexe est plus grande qu'une largeur d'une portion concave formée entre des portions convexes adjacentes, et
la portion convexe est agencée de manière à interrompre la portion concave adjacente à celle-ci dans une direction perpendiculaire à une direction dans laquelle l'isolateur sous vide est cintré quand un processus de cintrage est exécuté.

6. Isolateur sous vide (6) selon l'une quelconque des revendications 1 à 5, dans lequel l'élément d'emballage (4) est formé de manière à être capable de supprimer la formation de froissements dans le processus de cintrage en ayant la forme concave-convexe (3).

7. Procédé de réalisation d'un isolateur sous vide (6) selon l'une des revendications précédentes, comprenant les étapes consistant à:
- former un élément central (2) en stratifiant des matériaux fibreux;
- fournir deux films concave-convexe (1) dans lesquels une forme concave-convexe est formée;
- former un élément d'emballage (4) pour donner un sac par thermosoudure de trois côtés de deux films stratifiés quadrangulaires formant barrière aux gaz;
- insérer les films concave-convexe (1) stratifiés sur un côté frontal et un côté postérieur de l'élément central (2) depuis une portion ouverte (5) sur un côté de l'élément d'emballage (4),
réduire une pression dans une chambre à vide pour former une forme concave-convexe (3) correspondant à la forme concave-convexe du film concave-convexe (1) sur une surface de l'élément d'emballage (4), et ensuite thermosouder la portion ouverte (5).
